# EUROPEAN PATENT SPECIFICATION

(11) **EP 2 452 915 B1**
(45) Date of publication and mention of the grant of the patent: **14.10.2015**
(21) Application number: 12150052.4
(22) Date of filing: 10.06.2004
(51) Int. Cl.: C01B 3/16, C01B 3/58, B01J 23/52, B01J 37/20, B01J 21/06, B01J 35/00

(54) **Catalyst composition comprising gold on a sulfated zirconia and a method of making the catalyst**
Katalysatorzusammensetzung umfassend Gold auf sulfatiertem Zirkoniumdioxid und ein Verfahren zur Herstellung des Katalysators
Composition de catalyseur comprenant de l'or sur une zircone sulfatée et un procédé de fabrication du catalyseur

(30) Priority: 13.06.2003 US 478442 P
(43) Date of publication of application: 16.05.2012
(62) Divisional of application: 04776424.6
(73) Proprietor: Chevron U.S.A. Inc., San Ramon, CA 94583 (US)
(72) Inventor: Kuperman, Alexander, Orinda, California 94563 (US); Moir, Michael, E., San Rafael, California 94903 (US)
(74) Representative: Nash, David Allan

(56) References cited:
- WO-A2-02/47464
- US-A- 6 086 835
- US-A1- 2003 012 719
- US-B1- 6 448 198
- OHTSUKA H: "The selective catalytic reduction of nitrogen oxides by methane on noble metal-loaded sulfated zirconia", APPLIED CATALYSIS B: ENVIRONMENTAL, AMSTERDAM, NL, vol. 33, 1 January 2001 (2001-01-01), pages 325-333, XP002228705, DOI: 10.1016/S0926-3373(01)00190-4

## Description

### BACKGROUND OF THE INVENTION

Hydrogen (H₂) is an indispensable feedstock for many petroleum and chemical processes as well as increasingly in other applications such as a fuel for Fuel Cells. Refineries in the petroleum industry, and methanol, cyclohexane, and ammonia plants in the chemical industry consume considerable quantities of hydrogen during processes for the production of gasoline, fertilizers and other chemical products. As environmental regulations demand cleaner, renewable and non-polluting processes and products, most of the hydrogen balances at petroleum refineries are becoming negative. As laws mandate lower aromatics in gasoline and diesel fuels, H₂ is now consumed in aromatic saturation and thus, less H₂ is available as a by-product. At the same time, H₂ consumption is increasing in hydro-treating units in the refineries because many of these same laws require lower sulfur levels in fuels.

Hydrogen can be obtained as a byproduct in the catalytic reforming of naphtha. In particular, significant amounts of hydrogen can be obtained during dehydrocyclization of naphtha in selective processes such as the Aromax™ process. Hydrogen is also obtained by steam reforming methane or mixtures of hydrocarbons, a reaction which produces synthesis gas which comprises hydrogen, carbon dioxide and carbon monoxide (CO). Synthesis gas represents one of the most important feedstocks of the chemical and petroleum industries. It is used to synthesize basic chemicals, such as methanol or oxyaldehydes, as well as for the production of ammonia and pure hydrogen. However, synthesis gas produced by the steam reforming of hydrocarbons does not meet the requirements for further use in some processes because the CO/H₂ ratio is too high. Therefore it is industrial practice to reduce or adjust the CO content in the syngas by conversion with steam in what is often referred to as the water-gas shift (WGS) reaction. In some instances it is desired to increase the CO content. This reaction is called the reverse water-gas shift (RWGS) reaction.

To improve H₂ yield and also the operating efficiency of carbon monoxide conversion, the water-gas shift reaction is extensively used in commercial hydrogen or ammonia plants. The reaction can be described as:

CO + H₂O ⇆ CO₂ + H₂

The water-gas shift reaction is usually divided into a high temperature process and a low temperature process. The high temperature process is generally carried out at temperatures within the range of between 350 and 400 degrees C. The low temperature water-gas shift reaction typically takes place between 180 and 240 degrees C.

While lower temperatures favor more complete carbon monoxide conversion, higher temperatures allow recovery of the heat of reaction at a sufficient temperature level to generate high pressure steam. For maximum efficiency and economy of operation, many plants contain a high temperature reaction unit for bulk carbon monoxide conversion and heat recovery and a low temperature reaction unit for final carbon monoxide conversion.

Chromium-promoted iron catalysts have been used in the high temperature process at temperatures above 350 degrees C to reduce the CO content to 3-4% (see, for example, D. S. Newsom, Catal. Rev., 21, p. 275 (1980)). As is known from the literature (see for example, H. Topsoe and M. Boudart, J. Catal., 31, p. 346 (1973)), the chromium oxide promoter combines two functions. It serves to enhance catalytic activity and acts as a heat stabilizer, i.e., it increases the heat stability of magnetite, the active form of the catalyst, and prevents unduly rapid deactivation.

Unfortunately, when chromium is used, especially in hexavalent form, expenditures must be incurred to guarantee worker safety both during production and handling of the catalyst. Despite special efforts health hazards cannot be fully ruled out. In addition, the spent catalyst ultimately poses a hazard to man and the environment and must be disposed of with allowance for the government regulations relating to highly toxic waste. An example of an iron containing catalyst for this purpose that avoids the use of chromium is USP 5,830,425.

Catalysts used for the water-gas shift reaction at low temperature (or so-called low temperature shift reaction) in industry generally contain copper oxide, zinc oxide and aluminum oxide. Because these catalysts operate at relatively low temperature, they generate equilibrium carbon monoxide concentrations of less than 0.3% in the exit gas stream over an active low temperature shift catalyst. However, carbon monoxide conversion and hydrogen yield gradually decreases during normal operations as a result of deactivation of the catalyst. Deactivation can be caused by sintering and poisoning such as by traces of chloride and sulfur compounds in the feed and the hydrothermal environment of the reaction. The rate of the hydrothermal deactivation, in particular, is dependent on reaction conditions such as the temperature, the steam to gas ratio and composition of the feed gas mixture, and the formulation and manufacturing process of the catalyst.

Although copper is physically and physicochemically stabilized by both zinc oxide and aluminum oxide attempts of further stabilization of the catalyst have been made as is taught in the art. Sintering of copper crystallites is still thought to be a significant cause for deactivation/aging of the catalyst, especially when there are very low concentrations of poisons in the feed. For example, the copper crystallite size of a fresh catalyst can range from 3-10 nm (30-100 angstroms) in contrast with 10-100 nm (100-1000 angstroms) for a discharged spent catalyst. Low temperature shift catalysts thus need to be improved with regard to both activity and stability.

Another use for hydrogen that is becoming increasingly important is as a feedstock to a fuel cell to generate electricity. The Proton Exchange Membrane (PEM) fuel cell is one of the most promising fuel cell designs and PEM fuel cells are already commercially available in limited applications. PEM fuel cells as well as several other fuel cell designs currently in development require hydrogen as a feedstock along with oxygen. Processes being considered to supply the needed hydrogen include Steam Reforming, Partial Oxidation (POX), Autothermal Reforming, and variations thereof. Most such processes for hydrogen generation also produce Carbon Monoxide (CO). Yet many Fuel Cells, in particular PEM fuel cells, cannot tolerate CO and in fact can be poisoned by small amounts of CO. The water-gas shift reaction can be used to generate additional hydrogen and convert the CO into the more inert CO₂. Many fuel cells types including PEM fuel cells can tolerate CO₂ although it can act as a diluent. Alternatively some or all of the CO₂ can be removed from the H₂ feed to the fuel cell.

Another method of removing unwanted traces of CO from a hydrogen stream is by the use of CO oxidation to form CO₂. Examples of patents that use CO oxidation for reducing the amount of CO in a reformate gas are USP 6,332,901, USP 6,287,529,USP 6,299,995, and USP 6,350,423.

As mentioned above one of the most common methods for the hydrogen production using hydrocarbons is the steam reforming process or variations thereof. The main process step involves the reaction of steam with a hydrocarbon over a catalyst at 800°C to produce hydrogen and carbon oxides. It is typically followed by several additional steps to remove impurities and carbon oxide by-products (particularly CO) as well as to maximize hydrogen production. In the water-gas shift reaction carbon monoxide reacts with steam to produce carbon dioxide and additional hydrogen. This is often done in two steps. The high temperature shift (HTS) reaction usually runs at 350°C and reduces CO levels to 1%-2%. The low temperature shift (LTS) reaction runs at 200°C and reduces the amount of CO down to 0.1%-0.2%. In both cases, ideally the reaction is run in an excess of steam and at the lowest temperature possible to achieve the target conversion. Conventional iron/chromium-containing HTS catalysts are inactive below 300°C and copper/zinc-containing LTS catalysts lose the activity above 250°C. Both the HTS and LTS catalysts require in-situ reduction treatments and are extremely air sensitive. All currently available LTS catalysts are either pyrophoric or have a relatively low activity. Some of them are based on expensive precious metals such as Platinum (Pt), Palladium (Pd), and Rhodium (Rh). The pyrophoric nature of LTS catalysts contributes to an unacceptably rapid deactivation rate.

In the preparation of hydrogen for fuel cells, the WGS reaction zone can be the largest component of the fuel processor affecting its size, weight and performance factors such as its start-up time. Therefore, a WGS catalyst is needed which is air stable, low cost, and has high long term activity. In addition a WGS method that can operate over a wider temperature window without deactivation is needed. Furthermore a catalyst that can have high activity for WGS and/or CO oxidation is highly desired. The present invention provides such a catalyst and method.

Ohtsuka H: "The selective catalytic reduction of nitrogen oxides by methane on noble-loaded sulfated zirconia", Applied Catalysis B: Environmental, vol. 33, 2001-01-01, pages 325-333, discloses a study of the selective catalytic reduction of NOₓ by methane on noble metal-loaded sulfated zirconia (SZ) catalysts. Ru, Rh, Pd, Ag, Ir, Pt, and Au-loaded sulfated zirconia catalysts were compared with the intact sulfated zirconia.

### SUMMARY OF THE INVENTION

The present invention provides a water gas shift catalyst and a method of making the catalyst, as well as the use of the catalyst in a method for making hydrogen and a method for oxidizing CO.

The invention is as defined in the appended claims.

The invention is directed to a catalyst composition useful in water-gas shift reactions and/or CO oxidation reactions which comprises highly dispersed gold on sulfated zirconia as defined in claim 1. The catalyst of the present invention is particularly useful because it is non-pyrophoric and can be exposed to air without rapidly deactivating. Surprisingly, the catalyst of the present invention is also not significantly affected by moisture. The catalyst and method of the present invention surprisingly is highly effective for both low temperature and high temperature water-gas shift reactions as well as CO oxidation. Furthermore the catalyst is highly stable and is much less prone to deactivation than prior catalysts. The low deactivation rate of the method and catalyst of the present invention is thought to be due at least in part to the sulfating. Prior WGS processes and catalysts are typically effective for either high temperature water-gas shift or low temperature water-gas shift but not both. The present invention provides a method and catalyst that provides excellent CO conversion in the water-gas shift reaction over a wide range of process conditions. The excellent performance is seen at conditions comprising a surprising range of temperatures and space velocities

Among other factors the present invention provides a WGS method, a CO oxidation method, a WGS catalyst, and a method of making the catalyst that has enhanced performance over prior methods and catalysts. In particular the method and catalyst of the present invention are usable under both high temperature and low temperature shift conditions. In addition the catalyst and method of the present invention has a particularly low deactivation rate. The fact that the catalyst and method of the present invention is usable under both HT and LT shift conditions make it uniquely well suited for use in a fuel processor used for making hydrogen for use in a fuel cell. In such a fuel processor high conversion to hydrogen in the WGS reaction is required and very low levels of CO in the product hydrogen is essential. The method and catalyst of the present invention helps achieve both of those requirements - high conversion to H₂ and low levels of effluent CO.

The catalyst of the present invention can be used in both high temperature shift and low temperature shift conditions in order to maximize the conversion of CO in the overall process. A feed comprising CO and water may be passed over a catalyst of the invention at high temperature water-gas shift conditions to produce an effluent having a reduced CO content. At least a portion of said effluent may be passed over a catalyst comprising gold on sulfated zirconia at low temperature water-gas shift conditions to produce a second effluent comprising hydrogen and carbon dioxide.

Also disclosed herein is a method for carrying out the water-gas shift reaction in a fuel processor associated with a fuel cell which comprises contacting in a water-gas shift reaction zone a feed comprising carbon monoxide and water under water-gas shift conditions with an effective catalytic amount of the catalyst, and collecting from the water-gas shift reaction zone an effluent containing a significantly reduced amount of carbon monoxide as compared to the feed.

Also disclosed herein, the water-gas shift reaction can be carried out under both HT shift and LT shift conditions. This can be done in discrete zones where one zone is at HT shift conditions and another zone is at LT shift conditions. Alternatively the water-gas shift reaction can be carried out in a zone or zones having a continuum of conditions including both HT and LT shift conditions. The catalyst and method of the present invention is particularly well suited for such a continuum because of its activity at both HT and LT water-gas shift conditions.

The present invention may be used in conjunction with several syngas generating processes including autothermal reforming, steam reforming, and partial oxidation (POX). Another embodiment uses the method and catalyst of the present invention in conjunction with syngas generation from a steam reformer to convert a portion of the CO produced by the steam reformer to hydrogen. In this embodiment a desired CO/Hydrogen ratio in the effluent can be selected to suit the downstream use for the syngas. Thus the method and catalyst of the present invention can be used to achieve a desired CO/Hydrogen ratio for use in a Fischer-Tropsch process to make hydrocarbons from syngas. The catalyst described in the present invention can be used in both the water-gas shift reaction and the reverse water-gas shift reaction.

Also disclosed herein, hydrogen can be produced in a reactor or multitude of reactors that comprise an autothermal reforming zone to convert a feed comprising hydrocarbons to at least some hydrogen, water, and CO; a water-gas shift zone operating at a continuum of conditions including both HT and LT shift conditions where the water and CO are converted at least in part to hydrogen and CO₂; and a oxidation zone where remaining CO is oxidized to CO₂ to achieve a product comprising hydrogen containing low levels of CO suitable for use in a fuel cell.

Also disclosed herein, the catalyst of the present invention can be used in an oxidation zone where CO is oxidized to CO₂. The catalyst of the present invention has been shown to be effective in CO oxidation as is shown in the examples below. CO in the presence of oxygen can be oxidized to form CO₂ by passing a first feed comprising CO and a second feed comprising oxygen, in an oxidation zone, over a catalyst comprising highly dispersed gold on sulfated zirconia, at oxidation conditions, to produce an effluent comprising a lower level of CO then in the feed. Although not to be limited, this can be very effective and useful in removing unwanted traces of CO from hydrogen containing streams for uses such as in a PEM fuel cell. An example of a process where the catalyst and process of the present invention can be used to remove CO from a hydrogen containing stream is USP 6,682,838.

### DETAILED DESCRIPTION OF THE INVENTION

The present invention provides a novel catalyst for the Water-Gas Shift reaction, a method for preparing this catalyst and a method for conducting the water-gas shift reaction in the presence of this catalyst. The catalyst of this invention shows substantially higher activity and stability when compared to other catalysts. The catalyst of the present invention is as defined in claim 1, and optionally may be in association with modifiers and additives such as, for example Group I, Group II and rare earth oxides.

Surprisingly we have discovered that unusually active and stable WGS catalysts can be prepared when sulfated zirconia is used for the catalyst preparation. The presence of sulfate is critical for making the catalyst of the present invention with its outstanding performance. The sulfated zirconia has a sulfur content of between 0.02 and 1.0 wt% based on the weight of zirconia. We have further discovered that the catalyst of the present invention can operate in what is considered to be high temperature shift range down into the low and even ultra low temperature range. Thus processes using the novel catalyst of the invention are able to operate over a temperature range from 100 degrees C to 500 degrees C.

In a typical preparation, the catalysts of this invention may be prepared by an aqueous gold deposition onto a calcined sulfated zirconia support. This may be followed by drying in air at around ambient temperature or slightly higher, e.g., 35°C. Prior to use the catalyst may generally be activated in the reactor under nitrogen at 250°C for 2 hours.

Not wishing to be bound by any particular theory we believe that it is extremely important to keep Group 1 B metal from reducing to a zero valence metal state during the Group 1 B metal deposition process. Also it is believed that the sulfated zirconia support plays a critical role in keeping gold well dispersed. Additionally it is believed that it is advantageous for at least some of the zirconia to be in the tetragonal phase.

The highly dispersed gold may be present in a mixture of Group 1 B metals which includes at least some Gold. The Group 1 B metals are Gold, Silver and Copper.

In an embodiment of the present invention a majority of the zirconia in the catalyst should be in the tetragonal phase, more preferably the zirconia should be predominately in the tetragonal phase. The phase of the zirconia can be determined by the PXRD (Powder X-Ray Diffraction) pattern of the catalyst sample. The X-ray diffraction pattern can be used to determine the phase of the zirconia due to the different phases exhibit characteristic lines in the pattern.

It was demonstrated by scanning electron microscopy (SEM) and transmission electron microscopy (TEM) that the catalysts of this inventionmay have no detectable gold particles after gold deposition and drying steps. In the catalyst and method of the present invention the gold loading of the catalyst is at least 0.001 wt % based on the weight of zirconium oxide in the catalyst. The gold loading of the catalyst is between 0.01 and 3.0 wt % , more preferably between 0.1 and 3.0 wt %, and even more preferably between 0.1 and 2.0 wt % based on the weight of zirconium oxide in the catalyst. If silver or copper are used in the catalyst in combination with gold higher levels may be required than gold alone to achieve the same level of catalytic activity.

Another important feature of the catalyst of the present invention is that the gold be very highly dispersed on the catalyst. The methods for gold loading described in the Detailed Description of the Present Invention and in the Examples can lead to a very highly dispersed catalyst. Activation conditions must also be carefully selected to avoid agglomeration of the gold (or other Group 1 B metal) and loss of the very high dispersion. It is preferred that at least 80 wt % of the gold be dispersed in particles of less than 1 nm (10 angstroms) when measured by TEM. More preferably at least 90 wt % of the gold should be dispersed in particles of less than 1 nm (10 angstroms) when measured by TEM. Even more preferably there should be no detectable gold particles on the catalyst after gold deposition and drying steps when examined by TEM and SEM. In the present application the phrase no detectable gold particles means essentially no particles having an approximate diameter above 0.7 to 0.9 nm, (1 to 9 angstroms).

There is a trade off between the amount of surface area and stability of the sulfated zirconia support. So it is important that the zirconia surface area of the sulfated zirconia support be carefully controlled. The BET (Brunauer, Emmett, Teller) surface area of the sulfated zirconia support may be at least 5 m²/g, preferably at least 10 m²/g, more preferably between 10 and 500 m²/g, still more preferably between 30 and 250 m²/g and even more preferably between 50 and 100 m²/g. The BET surface area can be determined using ASTM D 4567 (volume 5.03) or ASTM D 3663.

As mentioned above it is also critical to the present invention that the catalyst comprise sulfated zirconia. It has been found that by employing the sulfated catalyst described above that the method disclosed herein displayed surprisingly low deactivation rates. Methods for making a sulfated zirconia material suitable for use as a starting material in the preparation of the catalyst of the present invention can be found in US Patents 6,448,198 and 6,180,555.

In addition to the sulfated zirconia, the catalyst of the present invention optionally can include an additional structural support material such as a refractory metal oxide material such as for example silica, alumina, magnesia, titania, etc. and mixtures thereof. The structural support can be in any form including for example monolith, spheres, or hollow cylinders. More specifically the structural support material can additionally include "supports" such as alumina, silica, silica-alumina, silicate, alumino-silicate, magnesia, zeolite, active carbon, titanium oxide, thorium oxide, clay and any combination of these supports. In one embodiment of the present invention preferably, the invention's catalyst can contain between 50% and 95% by weight of structural support, on which 5% to 50% of sulfated zirconia by weight is deposited.

In the method disclosed herein the catalyst of the present invention has been found to be effective at a surprisingly broad range of temperatures. For example, the water-gas shift reaction can be carried out between 100 and 500 °C preferably between 135 and 420 °C. It is understood by one of skill in the art that as catalysts become less active the reaction temperature may be increased to achieve a target conversion. However, increasing temperatures leads to an increased concentration of CO due to a shift in equilibrium.

Space velocities useable in the method of the present invention as measured by gas hourly space velocity (GHSV) are between 1000h⁻¹ to 200,000h⁻¹, preferably between 10,000h⁻1 to 100,000h⁻¹, more preferably between 25,000h⁻¹ to 100,000h⁻¹. It is understood by one of skill that the space velocity can be decreased to compensate for lower activity.

As mentioned above the methods disclosed herein can optionally include a CO oxidation zone in order to reduce the level of CO in the H₂ such that it is suitable for use in a fuel cell such as a PEM fuel cell. A potential advantage is that the WGS method can be used to convert most of the CO while also making hydrogen and leaving only a small amount or trace amount of CO to be oxidized in the CO oxidation zone. This means that the CO oxidation zone can be smaller in size and can further reduce the size and complexity of a fuel processor system. Under some circumstances the CO oxidation zone may be eliminated entirely. An example of a fuel processor that includes a combination partial oxidation/steam reforming zone, WGS zone, and CO oxidation zone is shown in USP 6,521,204.

Alternatively disclosed herein is a catalyst and method for CO oxidation. As discussed above CO oxidation can be used to remove the last traces of CO to achieve a H₂ stream containing very low levels of CO. The CO oxidation method and catalyst can be used in conjunction with the WGS method and catalyst or can be used independently.

### EXAMPLES

### Example 1 Preparation of a Sulfated Zirconia Base Material

This example shows the preparation of a mass sulfated zirconia material that can be used as a base for the catalyst of the present invention. 35 g of ZrO(NO₃)₂, 6H₂O is dissolved in 350 ml of distilled water with agitation. Zirconium hydroxide gel is precipitated by adding 17 ml of a 28% ammonia solution while agitating. The final pH is 8.5. After filtering and washing until a pH 7 (redispersal in 350 ml of water), the gel is dried overnight at 120 degrees C. The result is 13.8 g of a solid. The sulfation is done by adding 85 ml of sulfuric acid (1 N), by static contact for 15 minutes. The sulfated zirconia is then spun dry. Then the material is dried overnight at 120 degrees C.

### Example 2 Preparation of Sulfated Zirconia on an Alumina Support

This example shows the preparation of a structurally supported sulfated zirconia base that can be used in the catalyst of the present invention. The catalyst sample is prepared starting from 25 g of an alumina support, marketed by AKZO under the name CK 300, previously calcined at 600 degrees C. The zirconium deposition is done in a ball by impregnating the support with a solution formed by the dissolution of 3.48 g of zirconyl chloride (ZrOCl₂, 8 H₂O, marketed by Prolabo also available from Aldrich) and 0.46 g of NH₄Cl in 11 cm³ of distilled water, with a volume corresponding to the porous volume of the support. The solid obtained is first dried overnight at 120 degrees C then calcined for 2 hours at 650 degrees C. This operation is repeated twice (deposit of zirconium three times), then the solid obtained is calcined for 4 hours at 750 degrees C. Thereafter, the sulfation of the zirconium deposited on the surface of the alumina support takes place by circulating 162 cm³ of a sulfuric acid solution (5 N) at room temperature for 1 hour. Then the solid is spun-dry then allowed to dry overnight at 120 degrees C. Next it is calcined for 2 hours at 500 degrees C in a flow of dry air at 60 liters per hour.

### Example 3 Preparation of Calcined Sulfated Zirconia

A sample of sulfated zirconium hydroxide powder containing 2% wt of sulfate was calcined in air at 660°C according to the following procedure. Sulfated zirconium hydroxide can be obtained from commercial sources such as Aldrich. The sample was heated up to 660°C slowly over 10 hours and kept at this temperature for 6 hrs, followed by slow cooling to ambient temperature. The nitrogen BET (Brunauer, Emmett, Teller) surface area of the powder before the calcinations was found to be 284 m²/g and after the calcinations it was 75 m²/g. The starting powder was amorphous by Powder X-Ray Diffraction (PXRD). The PXRD pattern of the calcined material was that of the tetragonal phase of zirconia containing a small amount of the monoclinic phase.

### Example 4 Preparation of Gold on Calcined Sulfated Zirconia Catalyst (Gold Addition)

The gold was deposited on the calcined sample from Example 3 by first preparing a solution of 0.34g of HAuCl₄ x 3H₂O in 600 ml of distilled water and then heating the solution to 60°C. The acidity of the solution was adjusted to pH 8.6 by the addition of a 1.0 M sodium carbonate solution. 6g of the calcined sulfated zirconia sample was added to the solution and stirred for 2 to 3 hrs by slow rotation in a rotary evaporator. The resulting solid was removed by filtration and dried in an air convection oven at 35°C overnight. Finally the dry powdered sample was pressed and sized to -18/+40 (US) mesh for the reactor testing. The resulting catalyst had a nitrogen BET surface area unchanged of 75 m²/g. The PXRD pattern of the gold deposited sample showed both tetragonal and monoclinic phases of zirconia present in almost equal amounts. Elemental analysis results for various samples prepared by the above procedure showed that the amount of sulfate decreased to 0.26% wt. and the gold loading were in the range of 1 % wt. to 2% wt.

### Example 5 Gold Deposition Using a Reduced Amount of Water

The gold was deposited on the calcined sample from Example 3 by first preparing a solution of 0.20g of HAuCl₄ x 3H₂O in 60 ml of distilled water and then heating the solution to 60°C. The pH of the solution was adjusted to values between 9 and 10 by the addition of a 1.0 M sodium carbonate solution. 6g of the calcined sulfated zirconia sample was added to the solution and stirred for 2 to 3 hrs by slow rotation in a rotary evaporator. The resulting solid was separated by filtration, rinsed with 100ml of distilled water and dried in an air convection oven at 35°C overnight. Finally the dry powdered sample was pressed and sized to -18/+40 (US) mesh for the reactor testing.

### Example 6 Near Incipient Wetness Impregnation

The catalyst of this invention can also be prepared by near incipient wetness impregnation procedures of a gold compound on the sulfated zirconia support. Methods of Near Incipient Wetness Impregnation are taught in the art.

### Example 7 Performance of the Gold-Sulfated Zirconia Catalyst

2 cc of the catalyst from Example 2 was diluted with 6 cc of acid-washed alundum of the same size and loaded into a 1/2" (1.3 cm) O.D. stainless steel tube reactor. The catalyst bed was held in place with alundum and glass wool plugs on both ends. The catalyst was heated to up 250°C at a rate of 50°C/h in a 200 sccm flow of nitrogen overnight and then cooled to a test temperature.

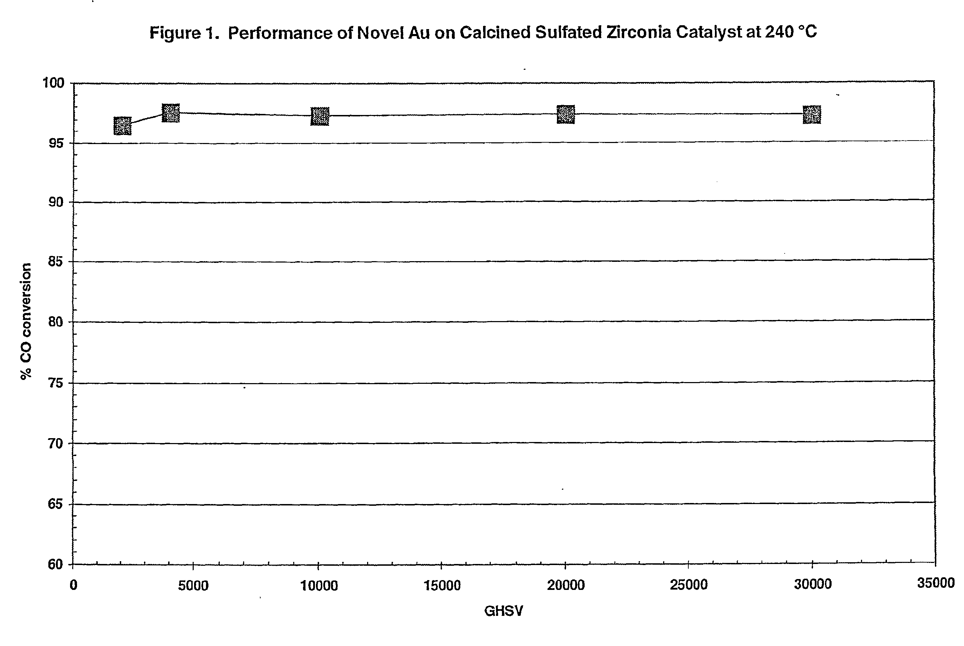

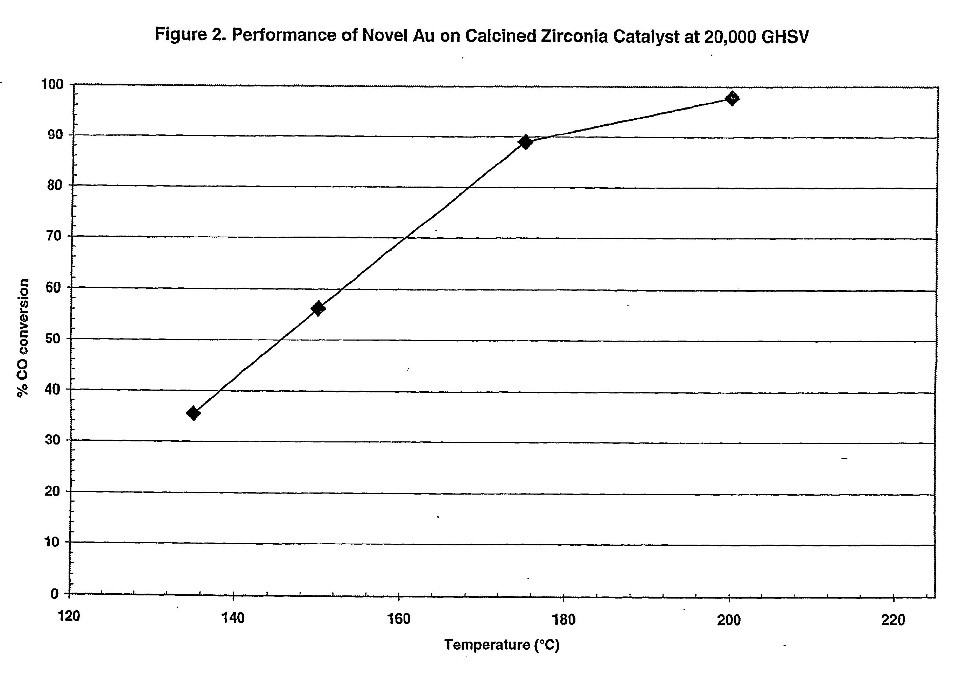

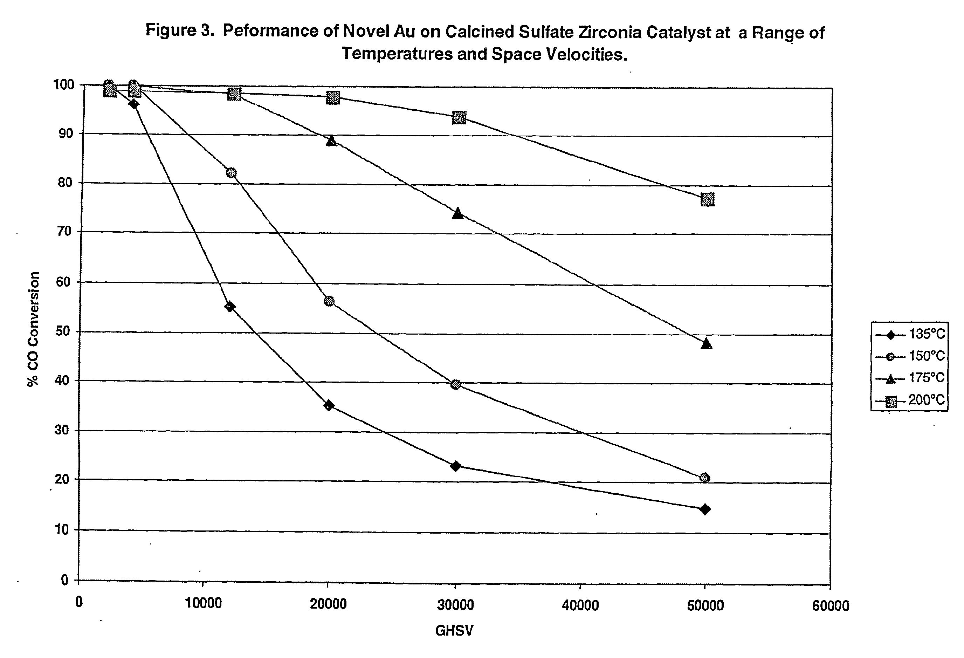

The catalysts were tested in the temperature range of 135°C to 420°C at space velocities of 2000h⁻¹ to 50000h⁻¹ based upon the volume of catalyst. Two different gas mixtures were used in the testing. The gas mixtures were produced either by blending four syngas components - CO, H₂, N₂ and CO₂ in a manifold or by using a mixture of a pre-defined composition. Water was introduced to the gas stream as vapor produced by heating the stream of liquid water in a small flash vessel just below the boiling point of water at the reactor pressure. For example, for the reaction mixture of the following composition - 11% vol. CO, 25.6% vol. H₂, 6.8% vol. CO₂, 31.1% vol. N₂, 25.4% vol. H₂O, at 20,000 GHSV, 200°C and a gauge pressure of 30 psi (207 kPa) the catalyst had constant activity at equilibrium CO conversion of 98.2% for the time it had been tested of 350 hours. At the same conditions but at a temperature of 350°C the catalyst operated at constant activity and equilibrium conversion of 86.1%. The results of catalyst performance at 240°C over a range of space velocities for the reaction mixture composition of 4.65% vol. CO, 34.31% vol. H₂, 7.43% vol. CO₂, 13.73% vol. N₂, 36% vol. H₂O are shown in Figure 1. The changes of the catalyst activity with temperature at 20,000 GHSV are shown in Figure 2 and over a range of space velocities at different temperatures in Figure 3 for this same gas mixture. Finally, for both reaction mixtures it was demonstrated that the catalyst could be cooled down to an ambient temperature in air, then heated back to a reaction temperature and restarted without loss of activity repeatedly.

### Example 8 Startup - Shutdown cycle performance

The catalyst from Example 2 was tested for effects of the feed mixture, in particular water, during temperature shutdown on catalyst performance. Initially, the reactor run was started according to the procedure in the previous example using the feed mixture containing 11% vol. CO, 25.6% vol. H₂, 6.8% vol. CO₂, 31.1% vol. N₂, 25.4% vol. H₂O, at 200°C and a gauge pressure of 30 psi (207 kPa). After the stable CO conversion was attained the heat to the reactor was turned off and the reactor was allowed to cool under the feed to ambient temperature. It was kept at these conditions for 1 hr followed by reheating of the reactor to 200°C under 200 sccm of nitrogen and re-introduction of the feed mixture. After the stable CO conversion was attained the procedure was repeated. For this particular experiment after ten cycles the CO conversion remained unchanged at 73% at 10,000 GHSV. This example demonstrates that the exposure of the catalyst to condensed water vapor does not affect significantly it's reactor performance.

### Example 9 Performance of the WGS catalyst in the presence of air

The catalyst of Example 2 was tested for effects of oxygen in the feed mixture. The reactor run was started according to the procedure in the previous example using the feed mixture containing 11% vol. CO, 25.6% vol. H₂, 6.8% vol. CO₂, 26.1% vol. N₂, 5.0% vol. O₂, 25.4% vol. H₂O, at 200°C and a gauge pressure of 30 psi (207 kPa). The catalyst was run at these conditions for 40 hours at average CO conversion of 98%. No significant loss of hydrogen was observed.

### Example 10 Performance of the Gold-Sulfated Zirconia Catalyst in CO oxidation

2 cc of the catalyst from Example 2 was diluted with 6 cc of acid-washed alundum of the same size and loaded into a 1/2" (1.3 cm) O.D. stainless steel tube reactor. The catalyst bed was held in place with alundum and glass wool plugs on both ends. The catalyst was heated to up 250°C at a rate of 50°C/h in a 200 sccm flow of nitrogen overnight and then cooled to a test temperature.

The catalyst was tested for CO oxidation activity by introducing to the reactor a CO/air feed at the ratio of 2 to 3 at 6000h⁻¹ GHSV at room temperature. The temperature in the reactor increased to 150°C when oxygen conversion approached 100% and stabilized. No decline in CO conversion was observed over 120 hrs operation. In the same experiment the feed to the reactor was switched back and forth between the CO/air mixture and the typical WGS feed as in Example 8. At 20000 h⁻¹ GHSV, 200°C and a gauge pressure of 30 psi (207 kPa) the CO conversion remained on average at 98%. This example clearly demonstrates that the same catalyst is very active catalyst for both WGS and CO oxidation reactions.

### Comparative Example 11 Preparation of Gold on Zirconia Catalyst in the Absence of Sulfate.

A sample of gold on zirconia was prepared as follows. 0.33 g of HAuCl₄ x 3H₂O was added to 600 ml of deionized water then heated to 60 degrees C. The pH was adjusted by dropwise addition of 1 N Na₂CO₃ until the solution cleared. The final pH was 8.55. 3.09 g of zirconium IV oxide extrudate was placed in a round bottom flask along with the gold containing solution. The flask was placed on a rotory evaporator and immersed in a bath that was maintained at 60 degrees C. The flask was allowed to rotate for 2 hours 10 minutes. The extrudate was then filtered from the solution. The extrudate had maintained their shape and rigidity after filtering. The extrudate was dried.

### Comparative Example 12 Performance of Gold on Zirconia Catalyst in the Absence of Sulfate

1.5 cc (1.7 g) of the Au on zirconia catalyst formed in Comparative Example 7 was loaded into a WGS tube reactor. The sample was first diluted with 6.5 cc of acid-washed 24/48 alundum and loaded into the 1/2" (1.3 cm) OD stainless steel tube reactor. The catalyst bed was held in place with alundum and glass wool plugs on both ends. The reactor was heated to 200 degrees C with a N₂ flow rate of 200 cc/min. The temperature was held at 200 degrees C for 1 hour then the Syngas mixture was introduced as the feed. The gauge pressure was raised to 30 psi (207 kPa) and the Syngas flow rate was set at 80.0 cc/min. H₂O was injected at a flow rate of 0.0165 ml/hr to achieve a space velocity of 4000 hr⁻¹. The process achieved a CO conversion initially of as much as 85 %. However at constant temperature (200 degrees C.) after 10 hours the conversion declined to 72% and after 20 hours to 64 %.

### Example 13 Performance of Au on Sulfated Zirconia Catalyst

2.0 cc (2.45 g) of Au on sulfated zirconia catalyst was loaded into a WGS tube reactor. The sample was first diluted with 6.0 cc of acid-washed 24 mesh alundum and loaded into the 1/2" (1.3 cm) OD stainless steel tube reactor. The catalyst bed was held in place with alundum and glass wool plugs on both ends. The reactor was heated to 200 degrees C with a N₂ flow rate of 200 cc/min. The temperature was held at 200 degrees C for 1 hour then the Syngas mixture was introduced as the feed. The gauge pressure was raised to 30 psi (207 kPa) and the Syngas flow rate was set at 80.0 cc/min. H₂O was injected at a flow rate of 0.0165 ml/hr to achieve a space velocity of 4000 hr⁻¹. The process achieved a CO conversion initially of as much as 96 %. After 20 hours of operation the conversion was at 95 %. This example shows that the Au on sulfated zirconia achieves better conversion and better stability than unsulfated Au on zirconia catalyst (see comparative example 12) at the same process conditions.

## Claims

1. A water gas shift catalyst, comprising:
(1) sulfated zirconia having a sulfur content of between 0.02 and 1.0 wt % based on the weight of zirconia;
(2) highly dispersed gold; and
wherein the gold content is between 0.001 and 3.0 wt % based on the weight of zirconia.

2. The catalyst of claim 1, wherein the catalyst comprises between 0.1 and 3.0 wt % gold based on the weight of zirconia.

3. The catalyst of claim 1 or 2, wherein the catalyst before activation has at least 90% of the gold dispersed in particles of less than 1 nm (10 angstroms) when measured by TEM.

4. The catalyst of any one of the preceding claims, wherein the sulfated zirconia is predominantly in the tetragonal form.

5. A method of making a water gas shift catalyst, comprising:
a) sulfating a zirconium hydroxide to form a sulfated zirconium hydroxide having a sulfate content of at least 0.1 wt % sulfate based on the zirconium hydroxide;
b) calcining the sulfate zirconium hydroxide to form sulfated zirconia; and
c) depositing gold on the sulfated zirconia to form a gold loaded sulfated zirconia having a gold content of 0.001 to 3.0 wt % and a sulfur content of between 0.02 and 1 wt %, based on the weight of zirconia.

6. The method of claim 5, wherein the catalyst comprises between 0.1 and 3.0 wt % gold based on the weight of zirconia.

7. The method of claim 5 or 6, wherein the catalyst before activation has at least 90% of the gold dispersed in particles of less than 1 nm (10 angstroms) when measured by TEM.

8. The method of any one of claims 5 to 7, wherein the sulfated zirconia is predominantly in the tetragonal form.

9. A method for making hydrogen comprising contacting in a water-gas shift zone a feed comprising carbon monoxide and water, under water-gas shift conditions, with a catalyst as claimed in any one of claims 1-4, and collecting from the water-gas shift reaction zone an effluent comprising hydrogen and carbon dioxide.

10. A method for oxidizing CO, comprising:
passing a first feed comprising CO and a second feed comprising oxygen, in an oxidation zone, over a catalyst as claimed in any one of claims 1-4, at oxidation conditions, to produce an effluent comprising a lower level of CO than in the first feed.

## Patentansprüche

1. Wassergas-Shift-Katalysator, umfassend
(1) sulfatiertes Zirconiumoxyd mit einem Schwefelgehalt von zwischen 0.02 und 1,0 Gew.-%, bezogen auf das Gewicht des Zirconiumoxyds;
(2) hoch dispergiertes Gold; und
wobei der Goldgehalt zwischen 0,001 und 3,0 Gew.-% ist, bezogen auf das Gewicht des Zirconiumoxyds.

2. Katalysator gemäß Anspruch 1, wobei der Katalysator zwischen 0,1 und 3,0 Gew.-% ist, bezogen auf das Gewicht des Zirconiumoxyds, umfasst.

3. Katalysator gemäß Anspruch 1 oder 2, wobei der Katalysator vor seiner Aktivierung mindestens 90% des Golds hat, dispergiert in Teilchen von geringer als 1 nm (10 Ångström) hat, gemessen mit TEM.

4. Katalysator gemäß irgendeinem der vorhergehenden Ansprüche, wobei das sulfatierte Zirconiumoxyd vorwiegend in der tetragonalen Form ist.

5. Herstellungsverfahren für einen Wassergas-Shift-Katalysator, umfassend
a) Sulfatieren eines Zirconiumhydroxyds zum Bilden eines sulfatierten Zirconiumhydroxyds mit einem Sulfatgehalt von mindestens 0,1 Gew.-% Sulfat, bezogen auf das Gewicht des Zirconiumhydroxyds;
b) Calcinieren des sulfatierten Zirconiumhydroxyds zum Bilden von sulfatiertem Zirconiumoxyd; und
c) Ablagern von Gold auf dem sulfatierten Zirconiumoxyd zum Bilden eines goldbeladenen sulfatierten Zirconiumoxyds mit einem Goldgehalt von 0,001 bis 3,0 Gew.-% und einem Schwefelgehalt von 0,02 bis 1 Gew.-%, bezogen auf das Gewicht des Zirkonoxyds.

6. Verfahren gemäß Anspruch 5, wobei der Katalysator zwischen 0,1 und 3,0 Gew.-% Gold umfasst, bezogen auf das Gewicht des Zirconiumoxyds.

7. Verfahren gemäß Anspruch 5 oder 6, wobei der Katalysator vor seiner Aktivierung mindestens 90% des Golds hat, dispergiert in Teilchen von geringer als 1 nm (10 Ångström) hat, gemessen mit TEM.

8. Verfahren gemäß irgendeinem der Ansprüche 5 bis 7, wobei das sulfatierte Zirconiumoxyd vorwiegend in der tetragonalen Form ist.

9. Herstellungsverfahren für Wasserstoff, umfassend Zusammenbringen in einem Wassergas-Shift-Bereich einer Zufuhr, umfassend Kohlenstoffmonoxyd und Wasser, unter Wassergas-Shift-Bedingungen, mit einem Katalysator, wie in irgendeinem der Ansprüche 1 bis 4 beansprucht, und Abnehmen eines Ausflusses, umfassend Wasserstoff und Kohlenstoffdioxyd, aus dem Wassergas-Shift-Bereich.

10. Verfahren zum Oxydieren von CO, umfassend Führen einer ersten Zufuhr, umfassend CO, und einer Zweiten Zufuhr, umfassend Sauerstoff, in einem Oxydationsbereich, über einen Katalysator, wie in irgendeinem der Ansprüche 1 bis 4 beansprucht, zum Herstellen eines Ausflusses, umfassend einen geringeren CO-Wert als in der ersten Zufuhr.

## Revendications

1. Catalyseur pour la réaction du gaz à l'eau, comprenant :
(1) de la zircone sulfatée ayant un contenu en soufre entre 0,02 et 1,0 pour cent en poids, sur la base du poids de la zircone ;
(2) de l'or hautement dispersé ; et
où le contenu en or est entre 0,001 et 3,0 pour cent en poids, sur la base du poids de la zircone.

2. Catalyseur selon la revendication 1, où le catalyseur comprend entre 0,1 et 3,0 pour cent en poids d'or, sur la base du poids de la zircone.

3. Catalyseur selon la revendication 1 ou 2, où le catalyseur avant l'activation a au moins 90 pour cent de l'or dispersé en particules de moins de 1 nm (10 ångströms) mesuré par MET.

4. Catalyseur selon l'une quelconque des revendications précédentes, où la zircone sulfatée est surtout en sa forme tétragonale.

5. Procédé pour produire un catalyseur pour la réaction du gaz à l'eau, comprenant :
a) sulfater un hydroxyde de zirconium pour former un hydroxyde de zirconium sulfaté ayant un contenu en sulfate d'au moins 0,1 pour cent en poids sur la base de l'hydroxyde de zirconium ;
b) calciner l'hydroxyde de zirconium sulfaté pour former une zircone sulfatée ; et
c) déposer de l'or sur la zircone sulfatée pour former une zircone sulfatée chargée d'or ayant un contenu en or de 0,001 à 3,0 pour cent en poids et un contenu en soufre de 0,02 à 1 pour cent en poids, sur la base du poids de la zircone.

6. Procédé selon la revendication 5, où le catalyseur comprend entre 0,1 et 3,0 pour cent en poids d'or, sur la base du poids de la zircone.

7. Procédé selon la revendication 5 ou 6, où le catalyseur avant l'activation a au moins 90 pour cent de l'or dispersé en particules de moins de 1 nm (10 ångströms), mesuré par MET.

8. Procédé selon l'une quelconque des revendications 5 à 7, où la zircone sulfatée est surtout en sa forme tétragonale.

9. Procédé pour produire de l'hydrogène comprenant contacter dans une zone de réaction du gaz à l'eau une alimentation comprenant du monoxyde de carbone et de l'eau, dans des conditions de réaction du gaz à l'eau, avec un catalyseur comme revendiqué dans l'une quelconque des revendications 1 à 4, et récupérer de la zone de réaction du gaz à l'eau un effluent comprenant de l'hydrogène et du dioxyde de carbone.

10. Procédé pour oxyder du CO, comprenant :
passer une première alimentation comprenant du CO et une deuxième alimentation comprenant de l'oxygène, dans un zone d'oxydation, à travers un catalyseur comme revendiqué dans une quelconque des revendications 1 à 4, dans des conditions d'oxydation, pour produire un effluent comprenant un niveau en CO moins élevé que dans la première alimentation.
